# EUROPÄISCHE PATENTSCHRIFT

(11) **EP 1 439 342 B1**
(45) Veröffentlichungstag und Bekanntmachung des Hinweises auf die Patenterteilung: **17.10.2007**
(21) Anmeldenummer: 04000599.3
(22) Anmeldetag: 14.01.2004
(51) Int. Cl.: F16K 31/54, F16H 19/04

(54) **Vorrichtung zum Betätigen von Ventilen für Trinkwasseranlagen in Flugzeugen**
Device for actuating valves for drinking water installations on airplanes
Un dispositif de commande d'une vanne utilisée dans des installations pour l'eau potable dans un avion

(30) Priorität: 16.01.2003 DE 10301417
(43) Veröffentlichungstag der Anmeldung: 21.07.2004
(73) Patentinhaber: Airbus Deutschland GmbH, 21129 Hamburg (DE)
(72) Erfinder: Lutzer, Wilhelm, Dipl.-Ing., 23619 Zarpen (DE)
(74) Vertreter: Hansmann, Dierk

(56) Entgegenhaltungen:
- DE-A- 10 002 556
- DE-A- 19 538 798
- DE-B- 1 199 079
- FR-A- 1 241 284
- FR-A- 2 570 156
- GB-A- 417 424
- US-A- 2 329 788
- US-A- 3 703 673

## Beschreibung

Die Erfindung bezieht sich auf eine Vorrichtung zum Betätigen von ventilen für Trinkwasseranlagen in Flugzeugen, wobei das Ventil durch eine rotatorische Bewegung seines Verstellhebels entweder in seine geöffnete oder seine geschlossene Endposition bewegbar ist.

Eine derartige Vorrichtung ist aus den Dokumenten US 3703673, US 2329788 und DE 19538798 bereits bekannt.

Die Betätigung von Ventilen mittels Drehgriffen zur Regulierung des Durchflusses von beispielsweise Flüssigkeiten ist allgemein bekannt. Hierbei ist die Einstellung einer geöffneten bzw. einer geschlossenen Endposition der Ventile ebenso möglich wie Zwischenstellungen zum Erreichen eines reduzierten Flüssigkeitsdurchflusses durch die Ventile. Bei Trinkwasseranlagen in Flugzeugen ist es oftmals erforderlich, Ventile über Kabelzüge betriebssicher zu betätigen.

Der Erfindung liegt nun die Aufgabe zugrunde, einen Mechanismus der eingangs genannten Art zu schaffen, mit dem eine translatorische Bewegung aus einem Kabelzug zur Betätigung eines Ventils und dabei eine einfache Fixierung zu ermöglichen.

Die Aufgabe wird erfindungsgemäß durch eine Vorrichtung mit den Merkmalen des Anspruchs 1 gelöst.

Ferner wird vorgeschlagen, daß die Zahnstange durch eine dem zahnradsegment gegenüberliegend angeordnete Andruckrolle zugeordnet ist.

Ein Vorteil der Erfindung besteht darin, daß die Umsetzung der translatorischen Bewegung aus dem Kabelzug in eine rotatorische Bewegung am Verstellhebel des Ventils keine Verstellkräfte über äußere Strukturbauteile des Flugzeuges oder die Ventilhalterung erforderlich macht.

Eine weitere Ausgestaltung besteht darin, daß eine zur Einstellung eines vorgegebenen Verstellwinkelns erforderliche Anzahl der Zähne des zahnsegmentes (1) bzw. Zahnrades.

Ferner wird bei Erreichung jeweils einer der beiden Endpositionen der formschlüssige Verbindung zwischen Zahnstange und Zahnsegment bzw. Zahnrad in Richtung der bisherigen translatorischen Bewegung reversibel unterbrochen wird.

Gemäß der Erfindung ist ein Eingreifen der Zähne von Zahnstange und Zahnsegment bei der rückwärtigen Bewegung nach Überschreiten einer Endposition sichergestellt.

Weiterhin wird vorgeschlagen, daß beide Endbereiche des Zahnradsegmentes Endanschläge für die korrespondierende Zahnstange aufweist.

Die Vorteile der Ausgestaltungen liegen darin, daß die rotatorische Bewegung des Verstellhebels des Ventils zwei konstruktiv vorgegebene fest definierte Endpunkte aufweist. Die rotatorische Bewegung wird in diesen Endpunkten jeweils beendet, während die translatorische Bewegung des Kabelzuges weitergeführt werden kann. Vorteilhafterweise können somit die beiden Endpositionen der rotatorischen Bewegung und damit des Ventilhebels bzw. des Ventils exakt eingestellt werden, obwohl die vorgegebene translatorische Verschiebung des Kabelzuges nicht exakt sein muß.

In der Zeichnung ist ein Ausführungsbeispiel nach der Erfindung dargestellt. Es zeigen:
- Fig. 1: einen Mechanismus zum Betätigen eines Flugzeugventils unter Verwendung eines Kabelzuges ;
- Fig. 2: den Mechanismus gemäß Fig. 1 mit einem über eine Endposition hinausgeführten Kabelzug;
- Fig. 3: den Mechanismus gemäß Fig. 1 in einer Endposition;
- Fig. 4: den Mechanismus gemäß Fig. 1 in einer Position, in der eine translatorische Bewegung des Kabelzuges in eine rotatorische Bewegung des Flugzeugventils umgesetzt wird;
- Fig. 5: den Mechanismus gemäß Fig. 1 in der anderen Endposition;
- Fig. 6: den Mechanismus gemäß Fig. 1 mit einem über die andere Endposition hinausgeführten Kabelzug und
- Fig. 7: Einzelbauteile des Mechanismus gemäß Fig. 1

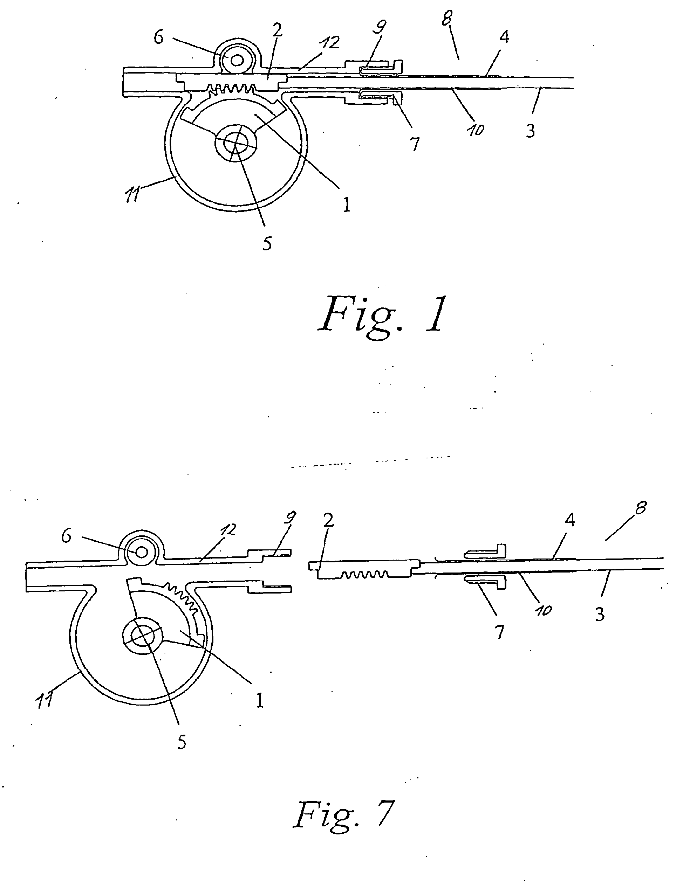

Der in Fig. 1 dargestellte Mechanismus weist ein in einem zylinderförmigen Gehäuse 11 drehbar angeordneten Zahnradsegment 1 mit einer vorgegebenen Anzahl von Zähnen auf. Die Achse 5 des Zahnradsegmentes 1 ist mit einem Verstellhebel eines zeichnerisch nicht dargestellten Ventils mechanisch fest verbunden, wobei das Ventil durch eine rotatorische Bewegung seines Verstellhebels entweder in seine geöffnete oder seine geschlossene Endposition bewegbar ist. Die Zähne des Zahnradsegmentes 1, welches auch durch ein Zahnrad ersetzt werden kann, greifen in die Zähne einer Zahnstange 2 ein, welche in einem rohrförmigen Gehäuse 12 verschiebbar gelagert ist. Beide Gehäuse 11 und 12 sind mechanisch derart miteinander verbunden, daß das Zahnradsegment 1 und die Zahnstange 2 derart zusammenwirken, daß zur Umsetzung einer von der Zahnstange 2 ausgeführten translatorischen Bewegung innerhalb des rohrförmigen Gehäuses 12 in eine rotatorische Bewegung des Zahnradsegmentes 1 innerhalb des zylinderförmigen Gehäuses 11. Über die Achse 5 des Zahnradsegmentes 1 erfolgt somit auch eine verstellung des Ventilhebels in seine Endpositionen oder in eine dazwischen liegende Stellung. Die Zahnstange 2 ist durch eine dem Zahnradsegment 1 gegenüberliegend angeordnete Andruckrolle 6 derart gesichert, daß ein Überspringen der Zähne von Zahnstange 2 und zahnradsegment 1 verhindert wird.

Ein Ende der Zahnstange 2 ist mit dem Innenzug 3 eines Kabelzuges 8 mechanisch fest verbunden, dessen Außenzug 4 mittels einer Verschraubung 7 an einem Schraubende 9 des rohrförmigen Gehäuses 12 mechanisch befestigt ist. Vorteilhafterweise ist die Bohrung 10 der Verschraubung 7 als Gleitführung für den Innenzug 3 des Kabelzuges 8 ausgebildet. Alle Einzelbauteile 1 bis 12 sind in Fig. 7 als Einzelteile dargestellt.

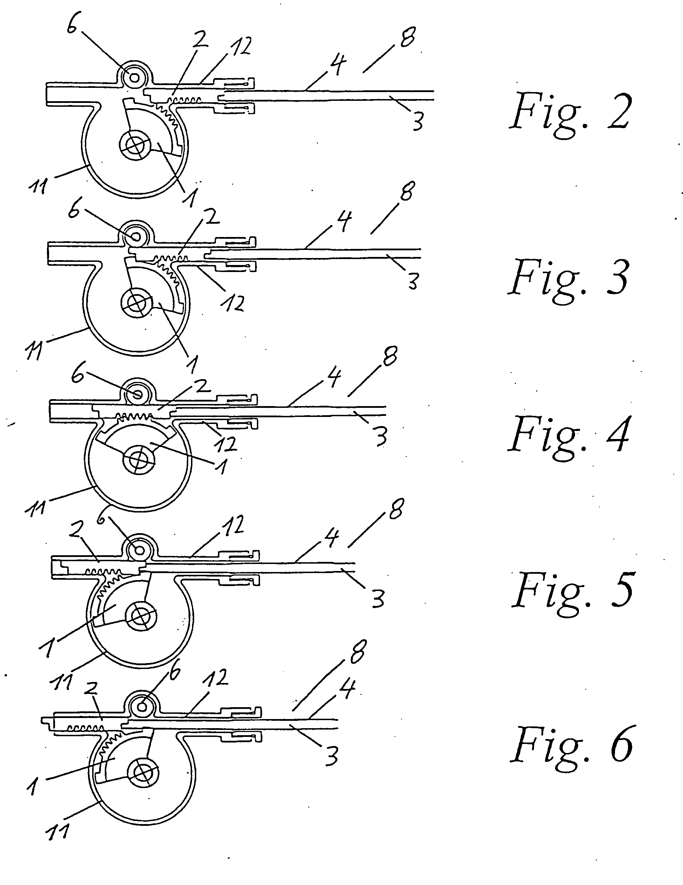

Es ist vorgesehen, daß entweder das Zahnradsegment 1 oder die zahnstange 2 eine zur Einstellung eines vorgegebenen Verstellwinkels des zahnradsegmentes 1 und damit des Ventilverstellhebels bzw. des ventils erforderliche Anzahl von Zähnen aufweist. Somit können die aus den Figuren 2 bis 6 ersichtlichen Positionen des Zahnradsegmentes 1 erteilt werden, und zwar zum Beispiel
- die Endpositionen gemäß den Fig. 3 und 5,
- eine Zwischenstellung gemäß Fig. 4 oder
- die über eine Endposition hinausgeführten Stellungen des Kabelzuges 8 gemäß den Fig. 2 oder 6, bei denen jeweils die formschlüssige Verbindung zwischen Zahnstange 2 und Zahnradsegment 1 in Richtung der bisherigen translatorischen Bewegung reversibel unterbrochen wird.

## Patentansprüche

1. Vorrichtung zum Betätigen eines Ventils für eine Trinkwasseranlage eines Flugzeuges, mit dem sich das Ventil durch eine rotatorische Bewegung seines Verstellhebels entweder in eine geöffnete oder eine geschlossene Endposition bewegen lässt, wobei die Vorrichtung ein Zahnradsegment (1) und eine Zahnstange (2) aufweist, welche beide mit mehreren seriell angeordneten Zähnen, die jeweils eine Zahnreihe bilden, ausgestattet sind, wobei die Zähne des Zahnradsegments (1) in die Zähne der Zahnstange (2) eingreifen werden, bei dem der Verstellhebel mit der Antriebsachse (5) des Zahnradsegments (1), das mit der Zahnstange (2) zusammenwirkt, mechanisch fest verbunden ist, wobei eine translatorische Bewegung der Zahnstange (2) in eine rotatorische Bewegung des Zahnradsegments (1) zum Verstellen des Ventils umgesetzt wird und die translatorische Bewegung eines mit der Zahnstange (2) mechanisch verbundenen Kabelzugs (3) durch den Eingriff der Zähne des Zahnradsegments (1) und der Zahnstange (2) in jene rotatorische Bewegung des Zahnradsegments (1) zum Verstellen des Ventils verwirklicht wird, wobei
beide Endbereiche des Zahnradsegments (1) und der Zahnradstange (2) zu beiden Seiten von deren Zahnreihe einem zahnlosen Bereich nachfolgend angeordnet sind, **dadurch gekennzeichnet, dass** beide Endbereiche des Zahnradsegments (1) mit einem Endanschlag für die korrespondierende Zahnstange (2) ausgestattet sind, dermaßen, dass ein Eingreifen der Zähne von Zahnstange (2) und Zahnradsegment (1) nach dem Überschreiten einer Endposition bei einer rückwärtigen Bewegung sichergestellt ist, wobei eine Blockierung des eingestellten Zahnradsegmentes (1) einstellbar ist.

2. Vorrichtung nach Anspruch 1, **dadurch gekennzeichnet, dass** bei Erreichung jeweils einer der beiden Endpositionen die formschlüssige Verbindung zwischen der Zahnstange (2) und dem Zahnradsegment (1) in Richtung der bisherigen translatorischen Bewegung reversibel unterbrochen ist.

## Claims

1. Device for actuating a valve for a drinking water installation of an aeroplane, with which the valve can be moved by a rotational movement of its shift lever either into an open or into a closed end position, wherein the device comprises a gear wheel segment (1) and a rack (2), both of which are provided with a plurality of teeth which are disposed in series and which in each case form a row of teeth, wherein the teeth of the gear wheel segment (1) will mesh with the teeth of the rack (2), the shift lever being firmly connected mechanically to the drive pin (5) of the gear wheel segment (1), which co-operates with the rack (2), wherein a translational movement of the rack (2) is converted into a rotational movement of the gear wheel segment (1) for shifting the valve and the translational movement of a cable assembly (3) mechanically connected to the rack (2) is converted by the meshing of the teeth of the gear wheel segment (1) and of the rack (2) into this rotational movement of the gear wheel segment (1) for shifting the valve, wherein both end regions of the gear wheel segment (1) and of the rack (2) are disposed subsequent to a toothless region on both sides of their row of teeth, **characterised in that** both end regions of the gear wheel segment (1) are provided with an end stop for the corresponding rack (2) so as to guarantee meshing of the teeth of the rack (2) and the gear wheel segment (1) after exceeding an end position when a backward movement takes place, wherein blocking of the adjusted gear wheel segment (1) can be adjusted.

2. Device according to Claim 1, **characterised in that** when one of the two end positions is reached in each case the positive connection between the rack (2) and the gear wheel segment (1) is terminated so as to be reversible in the direction of the previous translational movement.

## Revendications

1. Dispositif pour actionner une vanne pour une installation d'alimentation en eau potable d'un avion, permettant, par un mouvement de rotation de son levier de réglage, d'amener la vanne soit dans une position extrême ouverte soit dans une position extrême fermée, le dispositif comportant un segment de roue dentée (1) et une crémaillère (2), lesquels sont tous deux munis de plusieurs dents qui sont disposées en série et qui forment à chaque fois une rangée de dents, les dents du segment de roue dentée (1) s'engrenant avec les dents de la crémaillère (2), le levier de réglage étant solidarisé mécaniquement à l'axe d'entraînement (5) du segment de roue dentée (1) coopérant avec la crémaillère (2), un mouvement de translation de la crémaillère (2) étant converti en un mouvement de rotation du segment de roue dentée (1) pour régler la vanne, et le mouvement de translation d'un câble de traction (3) relié mécaniquement à la crémaillère (2) étant transformé par l'engrènement des dents du segment de roue dentée (1) et de la crémaillère (2) dans le mouvement de rotation du segment de roue dentée (1) destiné à régler la vanne, les deux zones d'extrémité du segment de roue dentée (1) et de la crémaillère (2) de part et d'autre des deux côtés de leur rangée de dents étant disposées à la suite d'une zone sans dent, **caractérisé en ce que** les deux zones d'extrémité du segment de roue dentée (1) sont munies d'une butée de fin de course pour la crémaillère correspondante (2), de façon à garantir un engrènement des dents de la crémaillère (2) et du segment de roue dentée (1) après le dépassement d'une position extrême lors d'un déplacement vers l'arrière, un moyen d'arrêt du segment de roue dentée réglé (1) étant réglable.

2. Dispositif selon la revendication 1, **caractérisé en ce que**, à l'atteinte de l'une des deux positions extrêmes, la liaison par complémentarité de formes entre la crémaillère (2) et le segment de roue dentée (1) est interrompue de manière réversible dans la direction du mouvement de translation opéré jusque-là.
